# EUROPEAN PATENT SPECIFICATION

(11) **EP 3 290 378 B1**
(45) Date of publication and mention of the grant of the patent: **22.04.2020**
(21) Application number: 16186654.6
(22) Date of filing: 31.08.2016
(51) Int. Cl.: B66B 11/02, B66B 1/34

(54) **METHOD AND DEVICE FOR OPERATING A CAR LIGHT AND A CAR FAN IN AN ELEVATOR CAR**
VERFAHREN UND VORRICHTUNG ZUM BETRIEB EINER BELEUCHTUNG UND EINES LÜFTERS IN EINER AUFZUGSKABINE
PROCÉDÉ ET DISPOSITIF DE FONCTIONNEMENT D'UNE LUMIÈRE DE CABINE ET VENTILATEUR DE CABINE DANS UNE CABINE D'ASCENSEUR

(43) Date of publication of application: 07.03.2018
(73) Proprietor: Inventio AG, 6052 Hergiswil (CH)
(72) Inventor: SANGALE, Narayan, 422611 Maharashtra (IN); SHINDE, Ulhas, 413532 Latur (IN)

(56) References cited:
- WO-A1-2005/080247
- JP-A- H06 107 379
- JP-A- 2002 145 538
- JP-A- 2011 207 538
- US-A1- 2004 188 182
- US-B2- 8 662 257

## Description

The present invention relates to elevators in general and to saving energy in an elevator by specifically operating a car light and a car fan in an elevator car. Furthermore, the invention relates to a computer program product adapted for instructing a computer for performing or controlling the proposed method and to a computer-readable medium comprising such computer program product stored thereon.

Elevators are generally applied for transporting passengers or items within a building on a vertical or inclined direction. Typically, an elevator car (sometimes also referred to as elevator cabin) is displaced within an elevator hoistway such that for example passengers may enter the car at one floor and exit the car after it has been displaced to another floor within the building. For avoiding any discomfort to the passengers during such travel, the car generally comprises a car light and a car fan. The car light is adapted for illuminating an interior space of the elevator car. The car fan is adapted for exchanging air from within the interior of the elevator car. Optionally, the car fan may be coupled to an air conditioning unit.

Of course, both the car light and the car fan need energy, typically electric energy, being supplied during their operation. Accordingly, operating the car light and the car fan increases an overall energy consumption of the elevator.

Various approaches for reducing an overall energy consumption of the elevator have been proposed. For example, EP 1 876 129 describes a device for reducing the energy consumption used in an elevator installation which can be alternatively brought into an operation mode and a stand-by mode by detecting a use criterion with a detecting means and bringing the elevator installation by a mode changing means from the operation mode to the stand-by mode in case of non-fulfilment of the use criterion and fulfilment of a stand-by criterion.

JP H06 107379 describes a method to control the illumination and the ventilation of an elevator car in a manner to save energy by reducing the intensity of the light and turn off the ventilation.

JP 2002 145538 describes another method to control the illumination and the ventilation of an elevator car, in manner when the elevator car is in energy saving mode, it closes the car doors and reduces the light intensity in the car.

For example, in existing elevator systems, a method for operating the elevator system may be implemented in an elevator controller such that the elevator car is moved to a specific parking position and rests there when there is no call from a floor indicated for example by actuating a landing operation panel (LOP) at one of a building's floor and there is no call for displacement of the elevator car to a specific floor by actuating for example a car operation panel (COP) for a specific delay time. The parking position may be for example one of the floors of the building at which there is a highest probability for the elevator car being required by a passenger.

When arrived at the parking position, there are generally two options available. According to a first option, the door of the elevator car as well as an associated landing door at the hoistway providing access to the neighbouring floor remain closed. In such first option, the car light and the car fan may be controlled by a timer and may be switched OFF as long as the elevator car is in the parking position, the doors are closed, no car call or floor call is initiated and the elevator is in passenger travel operation. According to a second option, the elevator car may be parked in its parking position with its door and the associated landing door being open. Conventionally, in this case, the car light and the car fan typically remain ON irrespective of any timer.

There may be a need for a method and a device for operating a car light and a car fan in an elevator car which enable reducing energy consumption within the elevator while avoiding discomfort to passengers of the elevator car. Furthermore, there may be a need for a computer program product allowing to instruct a programmable computer for performing or controlling the proposed method. There may also be a need for a computer-readable medium comprising such computer program product stored thereon.

Such needs may be met by the subject matter of one of the independent claims. Advantageous embodiments are defined in the dependent claims and the following specification.

According to a first aspect of the present invention, a method for operating a car light and a car fan in an elevator car are proposed. The method comprises monitoring a multiplicity of conditions comprising (a) detecting whether the elevator car is at a predetermined parking position, (b) detecting whether the car door of the elevator car is open, (c) detecting whether the elevator car is not currently accessed and (d) detecting whether the elevator car is not currently called. According to the method, after said monitored conditions are met for at least a predetermined period of time, the light intensity of the car light is dimmed to a non-zero reduced light intensity value and operation of the car fan is either reduced or completely switched off.

According to a second aspect of the invention, a device for controlling an operation of a car light and a car fan in an elevator car is proposed, the device being adapted for performing an embodiment of the method according to the above first aspect of the invention.

According to a third aspect of the invention, a computer program product comprising computer-readable instructions is proposed, which computer-readable instructions, when executed on a computer, are adapted for instructing the computer for performing or at least controlling a method according to an embodiment of the above first aspect of the invention.

According to a fourth aspect of the invention, a computer-readable medium is proposed, the computer-readable medium comprising the computer program product according to the above third aspect of the invention.

Ideas underlying embodiments of the present invention may be interpreted as being based, inter alia and without restricting any scope of the invention, on the following observations and recognitions.

It has been realized that during substantial periods of operating an elevator system, its elevator car does not currently provide any service such as transporting passengers or moving to passengers waiting at a floor after having requested the elevator car. Instead, during such substantial periods, the elevator is waiting in a stand-by mode for its next service and is typically parked in the parking position.

Conventionally, in such parked situation, either, according to the above first option, the doors of the car and/or the associated landing door is closed. In such configuration, internal functionalities such as the car light and the car fan may be switched OFF. However, for example, a passenger being in the floor at which the elevator car is parked may not realize that the elevator car is currently parked there due to the doors being closed. Or, according to the above second option, the elevator car is waiting at the parking position with its doors open such that passengers may easily recognize the waiting elevator car. However, in such configuration, the elevator car is conventionally waiting with its car light and car fan being switched ON.

It has now been found that energy consumption of the elevator system may be reduced by specifically operating the car light and the car fan while avoiding any reduction of discomfort to the elevator passengers.

Specifically, it is proposed to monitor a multiplicity of conditions within the elevator system, such conditions being indicative for whether the elevator car is currently in a situation in which its light and fan functions should be fully operating or whether it is in a situation in which these functions may be at least reduced or even switched off.

Specifically, it is detected whether the elevator car is in its predetermined parking position and whether its car door is in its open state. Furthermore, it is detected whether the elevator car is not currently accessed, i. e. whether for example a passenger does not currently enter the elevator car. And it is additionally detected whether the elevator car is not currently called, i. e. whether a passenger waiting in another floor apart from the parking position is not currently requesting the elevator car to come to this floor. If all these conditions are met for at least a predetermined period of time, this may be taken as indicating that the elevator is currently in its stand-by mode, i. e. is waiting at its parking position, and that no passenger is currently accessing the elevator car or calling the car.

In such situation, it has been found that light intensity of the car light may be reduced to a non-zero light intensity level and the car fan may be switched OFF without compromising the elevator's usability or any comfort to passengers.

Particularly, it is assumed that reducing the light intensity value of the car light during potentially long periods of time during which the elevator car is waiting in its stand-by mode at the parking position may significantly reduce the overall energy consumption of the elevator system.

On the other hand, when the car door of the waiting elevator car is open, it is assumed to be advantageous to not completely switch off the car light but to reduce the light intensity level to a non-zero value. When being dimmed to such non-zero reduced light intensity value, the interior of the elevator car is slightly illuminated and is therefore still visible to passengers approaching for example the associated landing door in a floor adjacent to the parking position. Accordingly, a passenger may realize that the elevator car is waiting at his floor as he sees the dimmed car light in the interior of the elevator car through the open car door.

According to an embodiment, the non-zero reduced light intensity value is between 5% and 50%, preferably between 10% and 20%, of a nominal light intensity value of the car light.

In other words, while the car light is adapted to illuminate the interior space of the elevator car during normal operation with its nominal light intensity value, according to the method proposed herein, the light intensity value shall be reduced to for example 10% to 20% of such nominal light intensity value as long as it is detected that the elevator car is waiting in stand-by in its parking positon based on the monitored multiplicity of conditions indicated above.

It is found that, by reducing the light intensity value to for example 10% to 20% of its nominal value, 80% to 90% of energy consumption for operating the car light may be saved during stand-by while still allowing a passenger to see that the elevator car is waiting at its parking position due to the dimmed light intensity being still clearly visible.

According to an embodiment, the predetermined period of time during which the monitored conditions shall be met is between 10s and 10min, preferably between 20s and 5min, more preferably between 1min and 2min.

It has been found that such period of time may be a good compromise between saving a maximum of energy, on the one hand, and providing best passenger comfort, on the other hand. If, for example, the light intensity of the car light is dimmed after more than 10min of all monitored conditions being met, the elevator car is brightly illuminated for an excessive period of time without probably any passengers being near to the waiting elevator car, and therefore energy is wasted. On the other hand, if the light intensity of the car light is dimmed very soon, for example after less than 10s after all monitored conditions are met, for example passengers having previously used the elevator may still be close to the elevator car and could be irritated by its car light being suddenly dimmed.

According to an embodiment, when performing the proposed method, the various conditions to be monitored are monitored based upon various types of information present in the elevator system. For example, whether the elevator car is at the predetermined parking position is detected based upon information from an elevator controller controlling displacements of the elevator car within the elevator hoistway. Whether a car door of the elevator car is open is detected based upon information from a door switch being activated upon changing a door opening state. Whether the elevator car is not currently accessed is detected based upon information from a light barrier arrangement being activated upon a light barrier along an entry area of the elevator car being interrupted. Finally, whether the elevator car is not currently called is detected based upon information from a call device to be activated for calling the elevator car to a requested floor.

Similarly, in the proposed device for controlling the operation of the car light and the car fan, the device may be adapted to obtain respective first to fourth information from the elevator controller, the door switch, the light barrier and the call device, respectively.

In other words, whether or not the elevator system is currently in an operating condition in which its car light could be dimmed and its car fan could be switched off without substantially compromising a passenger's comfort, may be easily determined based on information which is present in the elevator system anyway. Accordingly, in order to obtain all this information, already existing hardware in the elevator system may be used and, preferably, no or only few additional hardware is to be installed within the elevator system for enabling the proposed method. Accordingly, the proposed method may be easily implemented in an existing elevator system by, for example, adapting only the way in which its hardware components are operated and/or controlled. Thus, the proposed method may be easily implemented in software without substantial hardware being necessarily added to the elevator system.

Specifically, an elevator controller is typically present in an elevator system and controls any displacements of the elevator car due to for example car calls or requests being entered at a landing operation panel or a cabin operation panel. Typically, the elevator controller also determines when the elevator car is to be moved to its parking position and will generally instruct a drive engine accordingly. Thus, information can be provided by the elevator controller indicating whether or not the elevator car is presently at its parking position.

Similarly, door switches are typically provided at each of the car door and landing doors. These door switches are switched for example to an open state when the associated door is opened and are in their closed state only when the associated door is completely closed. The door switches may be interconnected serially to form a safety chain such that for example the elevator controller may determine whether all doors in the elevator system are currently closed. Accordingly, upon information from such door switch, it may be determined whether the car door is open or not.

Furthermore, a light barrier arrangement is typically provided in the elevator car. Such light barrier arrangement is generally established such as to generate a light barrier along the entry area of the elevator car. The light barrier may have one or more light beams crossing the entry area. In modern elevators, the light barrier is established as a light curtain with multiple light beams being arranged at very short distances of less than a few centimetres. Accordingly, a passenger entering or leaving the elevator car needs to cross such light barrier thereby interrupting the light beams and activating the light barrier arrangement. Thus, the fact whether or not the elevator car is currently accessed may be determined based on information from light barrier arrangement.

Finally, an elevator system typically comprises multiple call devices to be activated for calling the elevator car to a requested floor. For example, such call devices may be arranged next to each landing door at each of the floors. Therein, the term "call device" shall be interpreted broadly and shall not only relate to a mechanical button but to all technical provisions allowing for calling the elevator car. For example, the call device may also be implemented with an RFID reader to be activated by an approaching RFID tag, by a smart card reader to be activated by a smart card, etc. Accordingly, whether or not the elevator car is currently called may be easily determined based on information provided by such one or more call devices.

According to an embodiment, the device proposed herein for controlling the operation of the car light and the car fan further comprises a memory device for temporarily storing at least some of the first to fourth information used upon monitoring the multiplicity of conditions.

In other words, while the proposed device does not necessarily require any additional hardware for monitoring the multiplicity of conditions, a memory device may be included in the device in order to be able to temporarily store some of the information needed during monitoring the conditions.

For example, information from the light barrier arrangement indicating whether or not the elevator car is currently accessed can be stored and/or accumulated over a predetermined period of time such as to be able to track whether or not a passenger has entered the elevator car not only in the present moment but during the entire antecedent predetermined period of time.

According to an embodiment, when it is detected that the elevator car is currently accessed, the intensity of the car light is increased to its nominal light intensity value. In other words, as long as the elevator car is empty and waiting at the parking position with its door opened, its car light may be dimmed, but as soon as a passenger enters the elevator car, the car light should be switched to its nominal light intensity value immediately. Accordingly, the passenger enters the elevator car with sufficient illumination being present therein such as to avoid any discomfort to the passenger.

According to a further embodiment, the proposed method further comprises monitoring another multiplicity of conditions comprising (e) detecting whether a floor call for travelling of the elevator car to a requested floor is pending, (f) detecting whether the elevator car is parking at the parking position or is travelling to the requested floor, (g) detecting whether the car door of the elevator car is closed and (h) detecting whether the elevator car is not (or has not been) accessed during a predetermined antecedent period of time. When all monitored conditions are met, the light intensity of the car light shall be reduced and operation of the car fan shall be switched off.

In other words, after having waited at the parking position for a certain time with the car light being dimmed to a non-zero light intensity, the elevator car may be activated to travel to a requested floor upon a floor call being issued at that floor for example by activating a call device at the respective floor. If such floor call is detected, the elevator controller will send the elevator car to the requested floor after having closed its car door. In case no passenger has previously entered the elevator car, the car will be empty when travelling to the requested floor. In such situation, energy may be saved by further reducing the light intensity emitted by the car light as well as switching off the car fan.

Preferably, the light intensity of the car light is reduced to zero, i. e. the car light is completely switched off in such situation.

Expressed differently, the elevator car may wait at its parking position with dimmed but still visible light intensity and open doors. But, as soon as a floor call is registered, the car door will be closed and after a short moment the elevator car will start travelling to the requested floor. In such situation, if during a predetermined antecedent period of time of for example more than twenty seconds, preferably more than one minute, no access to the elevator car has been registered for example by a light barrier being interrupted by an entering passenger, it may be assumed that the elevator car is currently empty. Accordingly, during the travelling, the car light may be completely switched off and the car fan may also be stopped in order to save energy.

According to an embodiment, when the elevator car arrives at the requested floor, the intensity of the car light is increased to its nominal light intensity value and/or the car fan may be switched ON. Such resuming of normal operation conditions may be established shortly before the car door opens such that for example a passenger waiting at the requested floor will not realize that the car light was previously switched OFF.

It may be noted that the proposed measures for saving energy during travelling to a requested floor upon a floor call being pending may also be established in cases where the elevator car was not previously waiting at its parking position with open doors and dimmed light.

Referring to the third aspect of the invention, the computer program product may comprise computer-readable instructions in any programming language. The computer program product may be executable by any programmable computer or processor and may be stored in any computer-readable medium adapted for permanently or temporarily storing computer-readable instructions such as a DVD, a CD, a flash memory, a ROM (read only memory), a RAM (random access memory), on a server such as to be downloadable via a network such as the internet, etc. The computer program product may be uploaded for example into a programmable elevator controller comprising suitable memory means in order to thereby enable this elevator controller to perform the method as proposed herein. Thereby, for example an existing elevator and its elevator controller may be updated or modernized such as to enable significant energy savings, particularly during stand-by and/or empty travelling.

It shall be noted that possible features and advantages of embodiments of the invention are described herein partly with respect to an operating method, partly with respect to a controlling device and partly with respect to a computer program product. One skilled in the art will recognize that the features may be suitably transferred from one embodiment to another and features may be modified, adapted, combined and/or replaced, etc. in order to come to further embodiments of the invention.

In the following, advantageous embodiments of the invention will be described with reference to the enclosed drawing. However, neither the drawing nor the description shall be interpreted as limiting the invention.

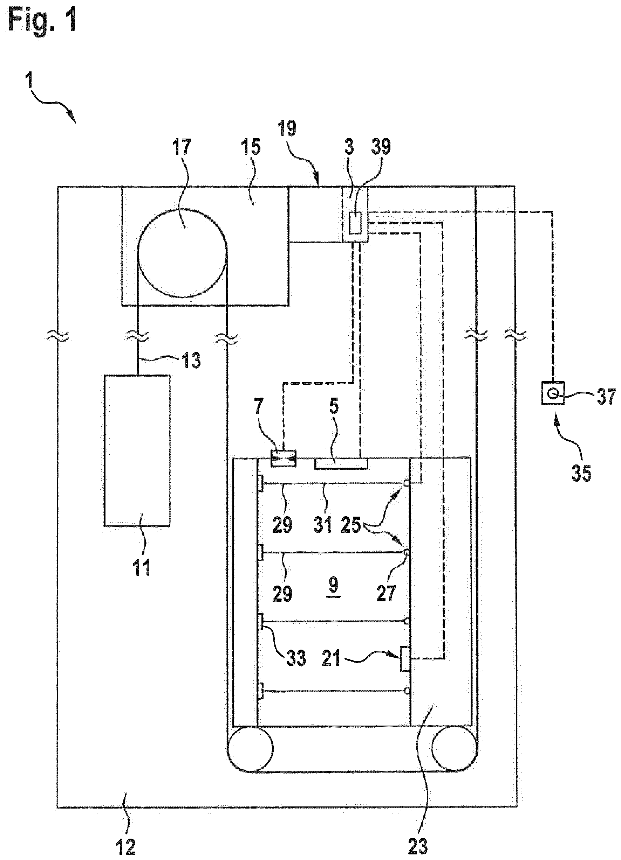

Fig. 1 shows an elevator comprising a controlling device for controlling operation of the elevator in accordance with an embodiment of the present invention.

The figure is only schematic and not to scale. Same reference signs refer to same or similar features.

Fig. 1 shows an elevator 1 including a controlling device 3 and thereby being adapted for operating a car light 5 and a car fan 7 in an elevator car 9 in an energy saving manner.

The elevator 1 comprises the elevator car 9 and a counterweight 11 suspended by a suspension traction means (STM) 13 comprising multiple ropes or belts. The suspension traction means 13 may be driven by a drive engine 15 comprising a traction sheave 17. An operation of the drive engine 15 is controlled by an elevator controller 19 such as to displace the elevator car 9 and the counterweight 11 in desired directions in a hoistway 12 and to desired levels by suitably rotating the traction sheave 17.

In order to safely control the operation of the elevator 1, the elevator controller 19 is connected to various components such as door switches 21 provided at a car door 23 in the elevator car 9 as well as at landing doors (not shown) opening an access between various floors in a building and various levels within the hoistway 12 extending throughout the building. The door switches 21 may detect whether or not an associated car door 23 or landing door is currently in its open state or in its closed state.

The elevator controller 19 is furthermore connected to a light barrier arrangement 25. The light barrier arrangement 25 comprises several light-emitting transceivers 27. Each transceiver 27 emits a light beam 31 in a direction towards a light reflector 33 across an entry area of the elevator car 9. This light beam 31 is reflected at the reflectors 33 and then at least partially detected within the transceiver 27. By arranging several transceivers 27 at various heights along the entry area, several light barriers 29 together forming a light curtain are established such that the light barriers 29 are interrupted upon any passenger entering the elevator car 9 through the entry area.

The elevator 1 further comprises a landing operation panel LOP 35 at each floor within the building serviced by the elevator 1 (represented only very schematically in Fig. 1). Each LOP 35 comprises a call device 37 to be activated by a passenger for requesting the elevator car 9 to come to his floor.

Information from all these components, i. e. from the door switch 21, from the light barrier arrangement 25 and from the call devices 37 is provided to the elevator controller 19 and is taken into account by the elevator controller 19 upon controlling the elevator operation. For example, if the elevator 1 is not used for a certain period of time, such as for several minutes, i. e. no car call is established at the LOP 35 and no car travelling is requested at a car operation panel (COP) for a certain period of time, the elevator controller 19 assumes that the elevator 1 is currently not used but in an idle or stand-by mode. In such condition, the elevator controller 19 may control the drive engine 15 such that the elevator car 9 travels to a parking position. For example, such parking position may be a most frequented floor within the building.

As shown in Fig. 1, the elevator controller 19 comprises the controlling device 3 incorporated therein. In other words, the controlling device 3 may be an integrated portion of the elevator controller 19. Alternatively, the controlling device 3 may be provided as a separate device or add-on device.

The controlling device 3 is specifically adapted for controlling the operation of the car light 5 provided at an interior space of the elevator car 9 for illuminating this volume. Furthermore, the controlling device 3 is adapted for controlling the operation of the car fan 7 such as to provide for a sufficient air exchange within the elevator car 9.

The controlling device 3 is connected to all the elevator components described above and conventionally included in modern elevators, i. e. is connected to the door switch 21, to the light barrier arrangement 25 and to the call device(s) 37 at the LOPs 35. Furthermore, as being included in the elevator controller 19, the controlling device 3 may obtain information from the elevator controller 19 concerning for example whether or not the elevator car 9 has been moved to its parking position.

When the controlling device 3 detects, based on first information from the elevator controller 19, that the elevator car 9 is currently at its predetermined parking position, the controlling device 3 then checks whether the car door 23 is currently open by checking a switching state of the door switch 21. If it is recognized that the car door 23 is currently open, it is furthermore monitored whether the elevator car 9 is currently accessed via its entry area. For this purpose, the controlling device 3 obtains information from the light barrier arrangement 25. Some or all of such information may be temporarily stored within a memory device 39 such as a RAM, a flash memory or similar comprised in the controlling device 3.

As soon as it is recognized that the elevator car 9 is in its parking position, the car door 23 is open and no access to the elevator car 9 occurred during a predetermined period of time of for example one to two minutes, the controlling device 3 assumes that no passenger is presently in the elevator car 9. In such situation, the controlling device 3 dims the car light 5 such that the car light 5 emits only between ten and twenty percent of its nominal light intensity value. Furthermore, the car fan 7 is switched off or at least its fanning capacity reduced.

By these two measures, energy consumption of the elevator 1 may be significantly reduced during times when the elevator car 9 is waiting at its parking position with doors 23 open. However, as the interior of the elevator car 9 is still slightly illuminated by the dimmed car light 5, a passenger approaching the landing door where the elevator car 9 is parked may clearly see the elevator car 9 through its open doors 23 and may therefore quickly enter the elevator car 9. Upon such entering, the light barrier arrangement 25 will detect an interruption of the light barrier 29 and inform the controlling device 3 accordingly. Alternatively, a passenger may call the elevator car 9 via the call device 37 which transmits this information to the controlling device 3. Upon such information, the controlling device 3 will increase the car light's 5 light intensity and will switch on the car fan 7.

By temporally reducing lighting and fanning functionalities in the elevator car 9 in situations where no passengers are assumed to use the elevator 1, an overall energy consumption of the elevator may be significantly reduced. All information required during the proposed controlling method may be obtained from components such as door switches 21, the light barrier arrangement 25 and/or call devices 37 which are typically present in modern elevators such that the proposed method may be implemented mainly in software and no substantial additional hardware is required. Thus, existing elevators may be easily retrofitted or modernized.

Finally, it should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

### List of reference signs

- 1: elevator
- 3: controlling device
- 5: car light
- 7: car fan
- 9: elevator car
- 11: counterweight
- 12: hoistway
- 13: suspension traction means
- 15: drive engine
- 17: traction sheave
- 19: elevator controller
- 21: door switch
- 23: car door
- 25: light barrier arrangement
- 27: transceiver
- 29: light barrier
- 31: light beam
- 33: reflector
- 35: landing operation panel
- 37: call device
- 39: memory device

## Claims

1. Method for operating a car light (5) and a car fan (7) in an elevator car (9), the method comprising:
monitoring a multiplicity of conditions comprising
- detecting whether the elevator car (9) is at a predetermined parking position based upon information from an elevator controller (19) controlling displacements of the elevator car within an elevator hoistway;
- detecting whether a car door (23) of the elevator car (9) is open based upon information from a door switch (21) being switched upon changing a door opening state;
- detecting whether the elevator car (9) is not currently accessed based upon information from a light barrier arrangement (25) being activated upon a light barrier (29) along an entry area of the elevator car (9) being interrupted;
- detecting whether the elevator car (9) is not currently called based upon information from a call device (37) to be activated for calling the elevator car (9) to a requested floor;
and after the conditions above are met for at least a predetermined period of time, dimming a light intensity of the car light (5) to a non-zero reduced light intensity value and either switching-off or reducing operation of the car fan (7).

2. The method of claim 1, wherein the non-zero reduced light intensity value is between 5% and 50% of a nominal light intensity value of the car light (5).

3. The method of one of claims 1 and 2, wherein the predetermined period of time is between 10s and 10min.

4. The method of one of the preceding claims, wherein, when detecting that the elevator car (9) is currently accessed, the intensity of the car light (5) is increased to its nominal light intensity value.

5. The method of one of the preceding claims, further comprising:
monitoring another multiplicity of conditions comprising
- detecting whether a floor call for travelling of the elevator car (9) to a requested floor is pending;
- detecting whether the elevator car (9) is parking at the parking position or travelling to the requested floor;
- detecting whether the car door (23) of the elevator car (9) is closed;
- detecting whether the elevator car (9) is not accessed during a predetermined antecedent period of time; and
when all monitored conditions are met, reducing a light intensity of the car light (5) and one of switching-off and reducing operation of the car fan (7).

6. The method of claim 5, wherein the light intensity of the car light is reduced to zero.

7. The method of claim 5 or 6, wherein, when the elevator car (9) arrives at the requested floor, the intensity of the car light (5) is increased to its nominal light intensity value.

8. Controlling device (3) for controlling an operation of a car light (5) and a car fan (7) in an elevator car (9), the controlling device (3) being adapted for performing the method according to one of claims 1 to 7.

9. The controlling device (3) of claim 8, wherein the device (3) is adapted to
- obtain first information from an elevator controller (19) controlling displacements of the elevator car (9) within an elevator hoistway and detect whether the elevator car (9) is at a predetermined parking position based on this first information;
- obtain second information from a door switch (21) being switched upon changing a door opening state and detect whether a car door (23) of the elevator car (9) is open based upon this second information;
- obtain third information from a light barrier arrangement (25) being activated upon a light barrier (29) along an entry area of the elevator car (9) being interrupted and detect whether the elevator car (9) is not currently accessed based upon this third information;
- obtain fourth information from a call device (37) to be activated for calling the elevator car (9) to a requested floor and detect whether the elevator car (9) is not currently called based upon this fourth information.

10. The controlling device (3) of claim 9, wherein the device further comprises a memory device (39) for temporarily storing at least some of the first to fourth information.

11. Computer program product comprising computer-readable instructions which, when executed on the controlling device (3) according to claims 8 to 10, are adapted for instructing the computer for performing or controlling a method according to one of claims 1 to 7.

12. Computer-readable medium comprising a computer program product according to claim 11 stored thereon.

## Patentansprüche

1. Verfahren zum Betreiben eines Kabinenlichtes (5) und eines Kabinenventilators (7) in einer Aufzugskabine (9), wobei das Verfahren umfasst:
Überwachen mehrerer Bedingungen, umfassend
- Erkennen, ob sich die Aufzugskabine (9) in einer zuvor bestimmten Parkposition befindet, basierend auf Informationen von einer Aufzugssteuerung (19), die Verschiebungen der Aufzugskabine innerhalb eines Aufzugsschacht steuert;
- Erkennen, ob eine Kabinentür (23) der Aufzugskabine (9) offen ist, basierend auf Informationen von einem Türschalter (21), der beim Ändern eines Türöffnungszustands geschaltet wird;
- Erkennen, ob die Aufzugskabine (9) momentan nicht betreten wird, basierend auf Informationen von einer Lichtschrankenanordnung (25), die beim Unterbrechen einer Lichtschranke (29) entlang eines Eintrittsbereichs der Aufzugskabine (9) aktiviert wird;
- Erkennen, ob die Aufzugskabine (9) momentan nicht gerufen wird, basierend auf Informationen von einer Rufvorrichtung (37), die zum Rufen der Aufzugskabine (9) zu einem angeforderten Stockwerk aktiviert wird; und
nachdem die obigen Bedingungen für wenigstens eine zuvor bestimmte Zeitspanne erfüllt sind, Dimmen einer Lichtintensität des Kabinenlichts (5) auf einen auf ungleich Null verringerten Lichtintensitätswert und entweder Ausschalten oder Verringern eines Betriebs des Kabinenventilators (7).

2. Verfahren nach Anspruch 1, wobei der auf ungleich Null reduzierte Lichtintensitätswert zwischen 5% und 50% eines Nominallichtintensitätswerts des Kabinenlichts (5) liegt.

3. Verfahren nach Anspruch 1 und 2, wobei die zuvor bestimmte Zeitspanne zwischen 10 Sek. und 10 Min. liegt.

4. Verfahren nach einem der vorhergehenden Ansprüche, wobei wenn erkannt wird, dass die Aufzugskabine (9) momentan betreten wird, die Intensität des Kabinenlichts (5) auf ihren Nominallichtintensitätswert gesteigert wird.

5. Verfahren nach einem der vorhergehenden Ansprüche, ferner umfassend:
Überwachen weiterer mehrerer Bedingungen, umfassend
- Erkennen, ob ein Etagenruf zum Fahren der Aufzugskabine (9) zu einer angeforderten Etage ansteht;
- Erkennen, ob die Aufzugskabine (9) sich in der Parkposition befindet oder in die angeforderte Etage fährt;
- Erkennen, ob die Kabinentür (23) der Aufzugskabine (9) geschlossen ist;
- Erkennen, ob die Aufzugskabine (9) während einer zuvor bestimmten vorhergehenden Zeitspanne nicht betreten wird; und
wenn alle überwachten Bedingungen erfüllt sind, Verringern einer Lichtintensität des Kabinenlichts (5) und Abschalten oder Verringern des Betriebs des Kabinenventilators (7).

6. Verfahren nach Anspruch 5, wobei die Lichtintensität des Kabinenlichts auf Null verringert wird.

7. Verfahren nach Anspruch 5 oder 6, wobei die Intensität des Kabinenlichts (5) auf ihren Nominallichtintensitätswert gesteigert wird, wenn die Aufzugskabine (9) in der angeforderten Etage ankommt.

8. Steuervorrichtung (3) zum Steuern eines Betriebs eines Kabinenlichts (5) und eines Kabinenventilators (7) in einer Aufzugskabine (9), wobei die Steuervorrichtung (3) zum Durchführen des Verfahrens nach einem der Ansprüche 1 bis 7 ausgelegt ist.

9. Steuervorrichtung (3) nach Anspruch 8, wobei die Vorrichtung (3) ausgelegt ist zum
- Erhalten erster Informationen von einer Aufzugssteuerung (19), die Verschiebungen der Aufzugskabine (9) innerhalb eines Aufzugsschachts steuert, und Erkennen, ob sich die Aufzugskabine (9) in einer zuvor bestimmten Parkposition befindet, basierend auf diesen ersten Informationen;
- Erhalten zweiter Informationen von einem Türschalter (21), der beim Ändern eines Türöffnungszustands geschaltet wird, und Erkennen, ob eine Kabinentür (23) der Aufzugskabine (9) offen ist, basierend auf diesen zweiten Informationen;
- Erhalten dritter Informationen von einer Lichtschrankenanordnung (25), die beim Unterbrechen eine Lichtschranke (29) entlang eines Eintrittsbereichs der Aufzugskabine (9) aktiviert wird, und Erkennen, ob die Aufzugskabine (9) momentan nicht betreten wird, basierend auf diesen dritten Informationen;
- Erhalten vierter Informationen von einer Rufvorrichtung (37), die zum Rufen der Aufzugskabine (9) zu einer angeforderten Etage aktiviert wird, und Erkennen, ob die Aufzugskabine (9) momentan nicht gerufen wird, basierend auf diesen vierten Informationen.

10. Steuervorrichtung (3) nach Anspruch 9, wobei die Vorrichtung ferner eine Speichervorrichtung (39) zum vorübergehenden Speichern von wenigstens einigen der ersten bis vierten Informationen umfasst.

11. Computerprogrammerzeugnis, das computerlesbare Anweisungen umfasst, die, wenn sie auf der Steuervorrichtung (3) nach den Ansprüchen 8 bis 10 ausgeführt werden, zum Anweisen des Computers zum Durchführen oder Steuerns eines Verfahrens nach einem der Ansprüche 1 bis 7 ausgelegt ist.

12. Computerlesbares Medium, umfassend ein darauf gespeichertes Computerprogrammerzeugnis nach Anspruch 11.

## Revendications

1. Procédé de fonctionnement d'un éclairage de cabine (5) et d'un ventilateur de cabine (7) dans une cabine d'ascenseur (9), le procédé comprenant :
la surveillance d'une multiplicité de conditions comprenant
- le fait de détecter si la cabine d'ascenseur (9) est à une position de stationnement prédéterminée en fonction d'informations provenant d'un dispositif de commande d'ascenseur (19) commandant les déplacements de la cabine d'ascenseur dans une cage d'ascenseur ;
- le fait de détecter si une porte de cabine (23) de la cabine d'ascenseur (9) est ouverte en fonction des informations provenant d'un interrupteur de porte (21) qui est commuté lors du changement d'un état d'ouverture de porte ;
- le fait de détecter si la cabine d'ascenseur (9) n'est pas actuellement accédée en fonction d'informations provenant d'un agencement de barrière lumineuse (25) activé sur une barrière lumineuse (29) le long d'une zone d'entrée de la cabine d'ascenseur (9) étant interrompue ;
- le fait de détecter si la cabine d'ascenseur (9) n'est pas en cours d'appel en fonction d'informations provenant d'un dispositif d'appel (37) à activer pour appeler la cabine d'ascenseur (9) à un étage demandé ; et
une fois que les conditions ci-dessus sont remplies pendant au moins une période de temps prédéterminée, l'atténuation de l'intensité lumineuse de l'éclairage de cabine (5) à une valeur d'intensité lumineuse réduite non nulle et l'extinction ou la réduction du fonctionnement du ventilateur de la cabine (7).

2. Procédé selon la revendication 1, dans lequel la valeur d'intensité lumineuse réduite non nulle est comprise entre 5 % et 50 % d'une valeur d'intensité lumineuse nominale de l'éclairage de cabine (5).

3. Procédé selon l'une des revendications 1 et 2, dans lequel la période de temps prédéterminée est comprise entre 10 s et 10 min.

4. Procédé selon l'une des revendications précédentes, dans lequel, lors de la détection de l'accès actuel à la cabine d'ascenseur (9), l'intensité de l'éclairage de cabine (5) est augmentée jusqu'à sa valeur d'intensité lumineuse nominale.

5. Procédé selon l'une des revendications précédentes, comprenant en outre :
la surveillance d'une autre multiplicité de conditions comprenant
- le fait de détecter si un appel d'étage pour le déplacement de la cabine d'ascenseur (9) vers un étage demandé est en attente ;
- le fait de détecter si la cabine d'ascenseur (9) se stationne à la position de stationnement ou se rend à l'étage demandé ;
- le fait de détecter si la porte de cabine (23) de la cabine d'ascenseur (9) est fermée ;
- le fait de détecter si la cabine d'ascenseur (9) n'est pas accédée pendant une période de temps prédéterminée antécédente ; et
lorsque toutes les conditions surveillées sont remplies, la réduction d'une intensité lumineuse de l'éclairage de cabine (5) et l'extinction ou la réduction du fonctionnement du ventilateur de la cabine (7).

6. Procédé selon la revendication 5, dans lequel l'intensité lumineuse de l'éclairage de cabine est réduite à zéro.

7. Procédé selon la revendication 5 ou 6, dans lequel, lorsque la cabine d'ascenseur (9) arrive à l'étage demandé, l'intensité d'éclairage de la cabine (5) est augmentée jusqu'à sa valeur d'intensité lumineuse nominale.

8. Dispositif de commande (3) pour commander le fonctionnement d'un éclairage de cabine (5) et d'un ventilateur de cabine (7) dans une cabine d'ascenseur (9), le dispositif de commande (3) étant conçu pour exécuter le procédé selon l'une des revendications 1 à 7.

9. Dispositif de commande (3) selon la revendication 8, dans lequel le dispositif (3) est conçu pour
- obtenir les premières informations à partir d'un dispositif de commande d'ascenseur (19) commandant les déplacements de la cabine d'ascenseur (9) dans une cage d'ascenseur et détecter si la cabine d'ascenseur (9) est à une position de stationnement prédéterminée en fonction de ces premières informations ;
- obtenir les deuxièmes informations à partir d'un interrupteur de porte (21) commuté lors du changement d'un état d'ouverture de porte et détecter si une porte de cabine (23) de la cabine d'ascenseur (9) est ouverte en fonction de ces deuxièmes informations ;
- obtenir les troisièmes informations à partir d'un agencement de barrière lumineuse (25) activé sur une barrière lumineuse (29) le long d'une zone d'entrée de la cabine d'ascenseur (9) interrompue et détecter si la cabine d'ascenseur (9) n'est pas en cours d'accès en fonction de ces troisièmes informations ;
- obtenir les quatrièmes informations à partir d'un dispositif d'appel (37) à activer pour appeler la cabine d'ascenseur (9) à un étage demandé et détecter si la cabine d'ascenseur (9) n'est pas en cours d'appel en fonction de ces quatrièmes informations.

10. Dispositif de commande (3) selon la revendication 9, dans lequel le dispositif comprend en outre un dispositif de mémoire (39) pour stocker temporairement au moins certaines des premières à quatrièmes informations.

11. Produit de programme informatique comprenant des instructions lisibles par ordinateur qui, lorsqu'elles sont exécutées sur le dispositif de commande (3) selon les revendications 8 à 10, sont conçues pour demander à l'ordinateur d'exécuter ou de commander un procédé selon l'une des revendications 1 à 7.

12. Support lisible par ordinateur comprenant un produit de programme informatique selon la revendication 11, stocké sur celui-ci.
